# EUROPÄISCHE PATENTSCHRIFT

(11) **EP 0 597 193 B1**
(45) Veröffentlichungstag und Bekanntmachung des Hinweises auf die Patenterteilung: **29.01.1997**
(21) Anmeldenummer: 93112883.9
(22) Anmeldetag: 11.08.1993
(51) Int. Cl.: F16L 3/10, F16L 3/12

(54) **Rohrschelle**
Pipe clamp
Collier de fixation

(30) Priorität: 11.08.1992 DE 9210662 U; 29.10.1992 DE 9214700 U
(43) Veröffentlichungstag der Anmeldung: 18.05.1994
(73) Patentinhaber: SW Stanzwerk Glarus AG, 8750 Glarus (CH)
(72) Erfinder: Mächtle, Roland, D-70825 Korntal-Münchingen (DE)
(74) Vertreter: Jochem, Bernd, Dipl.-Wirtsch.-Ing.

(56) Entgegenhaltungen:
- EP-A- 0 319 521
- DE-A- 4 015 404
- US-A- 2 835 954

## Beschreibung

Die Erfindung bezieht sich auf eine Rohrschelle, deren Schellenband zwei mittels einer Schraube zusammenziehbare Flansche aufweist, von denen einer eine Gewindeöffnung für den Schraubenscahft und der zweite einen Durchgang für den Schraubenkopf enthält und von einer Halteplatte überdeckt ist, die am äußeren Ende einen Einschnitt als Aufnahme für den Schraubenschaft, am inneren Ende eine Zunge sowie den Flansch seitlich überfassende Führungsschenkel aufweist.

Bei einer aus der DE 40 15 404 Al bekannten Rohrschelle der vorbezeichneten Art sind die an der Halteplatte abgewinkelten Führungsschenkel in seitlichen Aussparungen des von ihr überdeckten Flansches geführt. An den freien Enden der Führungsschenkel befinden sich seitwärts gegeneinander abgebogene Anschlagschenkel, die den Flansch in einem die schwenkende Ausweichbewegung der Halteplatte gegenüber dem Schraubenkopf zulassenden Abstand unterfassen. Wenn die beiden Flansche sich beim Schließen der Rohrschelle annähern, bewegen sich die Führungs- und Anschlagschenkel der Halteplatte durch seitliche Aussparungen des die Schraube tragenden Flansches. Da bei der bekannten Rohrschelle außer der schwenkenden Ausweichbewegung auch eine translatorische Ausweichbewegung der Halteplatte in Radialrichtung ermöglicht werden soll, können beim beabsichtigten selbsttätigen Schließvorgang der Schelle gewisse Zwängungen eintreten, die sich nur durch sorgfältiges Einhalten bestimmter Längen- und Höhenmaße der Führungsschenkel und der seitlichen Flanschaussparungen und hohe Fertigungsgenauigkeit vermeiden lassen.

Der Erfindung liegt die Aufgabe zugrunde, eine Rohrschelle zu schaffen, die sich durch niedrige Gestehungskosten und eine schnelle, einfache Montage am Rohr auszeichnet, wobei zur Verbesserung des selbsttätigen Schließ- oder Verriegelungsablaufes die Beweglichkeit der am Schellenband gehaltenen Halteplatte erhöht werden soll.

Erfindungsgemäß wird diese Aufgabe durch das Kennzeichen des Anspruches 1 gelöst. - Indem sich die Führungsschenkel mit beträchtlicher Höhe über die Länge der Halteplatte erstrecken, bleibt diese bei Handhabungen der Rohrschelle an dem von ihr überdeckten Flansch geführt und gegen Abgleiten oder Herabfallen gesichert. Die in Richtung zum äußeren Flanschende zunehmende Höhe der Führungsschenkel sichert die Halteplatte während ihrer bestimmungsgemäßen Ausweichbewegung, die dadurch mit verhältnismäßig großen Freiheitsgraden stattfinden kann. Dazu trägt auch die im Schellenband vorgesehene Öffnung bei, die der Zunge und damit der Halteplatte schwenkende sowie lineare Ausweichbewegungen gestattet, wenn die Halteplatte durch den Schraubenkopf von dem sie tragenden Flansch abgehoben wird und sich schwenkend entfernt. Indem sich der Schwenkanteil der Ausweichbewegung der Halteplatte aufgrund des an ihrem vorderen Einschnitt vorbeizubewegenden Schraubenkopfes reduziert, wird die zum Zusammenklipsen der Schelle notwendige Schraubenlänge verkürzt. Die Halteplatte benötigt somit nur einen kurzen Schwenkweg bis zum Einrasten bzw. Untergreifen des Schraubenkopfes. Aufgrund dieser Maßnahme werden folglich nicht nur kürzere Schrauben, sondern auch eine einfachere verkürzte Schraubzeit zum Anziehen der Schraube um das Rohr möglich. Ohne die Beweglichkeit der Halteplatte zu beschränken, kann sie durch ihre Führungs- und Sicherungsansätze unverlierbar mit dem Schellenband verbunden werden. Zusätzlich sorgen diese Ansätze für eine Führung und Lagerung der Halteplatte bei ihrer linearen bzw. schwenkenden Ausweichbewegung.

Die Führungsansätze können auf verschiedene Arten ausgeführt sein, z.B. als rückwärtige Verlängerungen der Halteplatten-Ebene oder der seitlichen Führungsschenkel, wobei sie sich im letzteren Fall mindestens an ihren abgewinkelten Enden bis in den Bereich des Schellenbandes erstrecken. Die Sicherungsansätze können bei der Montage aus ihrem ursprünglich gespreizten Verlauf z.B. durch Anwendung eines leichten Zangendruckes in ihre das Schellenband umfassende Position verbogen werden. Um eine Verbreiterung der Rohrschelle durch die Halteplatte zu vermeiden, können die Führungsansätze sich durch seitliche Ausnehmungen des Schellenbandes erstrecken, die bis um die Flanschbiegelinie herum in den Flansch reichen oder sich bis über die gesamte Flanschlänge erstrecken. Die das Schellenband umfassenden Enden der Sicherungsansätze können vorzugsweise dann in aus dem Band nach vorn herausgedrückten seitlich offenen Taschen aufgenommen und geführt sein, wenn die Schelle ohne Einlage benutzt wird. Wenn der Flansch bis zu seinem freien Ende hin um die Breite der im Schellenband angeordneten seitlichen Ausnehmungen verschmälert ist, läßt sich die Halteplatte mit den bereits angeformten Führungsansätzen und umgebogenen Sicherungsenden von vorne auf den Flansch aufschieben. Die Flanschbreite ist dann geringfügig kleiner als der seitliche Abstand zwischen den Führungsansätzen.

Gemäß einer Variante können die Führungsansätze dadurch ersetzt sein, daß die Halteplatte am inneren Ende etwas verlängert ist und eine sich über die Breite des Flansches erstreckende Stanzöffnung enthält, wobei der hinter der Öffnung befindliche Abschnitt, der die Sicherungsfunktion übernimmt, in einer aus dem Schellenband herausgedrückten querverlaufenden Tasche oder Sicke aufgenommen bzw. festgelegt ist.

In den Fällen, in denen die Rohrschelle ohne Gummieinlage zur Anwendung kommt, welche die Zunge und damit die Halteplatte in Richtung auf den Flansch drückt, enthält die Halteplatte nahe den Flanschseiten zwei Stanzlöcher, durch die hindurch der Rand des Flansches mit einem Werkzeug von außen verformt bzw. verbreitert wird, so daß die Halteplatte nach der Montage nicht mehr vom Flansch abgleiten oder abfallen kann.

Es ist günstig, wenn der seitliche Abstand der Führungsschenkel der Halteplatte an ihren unteren Enden im Bereich der größeren Schenkelhöhe durch gerundete oder winklige Abbiegungen erweitert ist. Dadurch wird beim Zurückfedern der Halteplatte im Zuge ihres Einklipsvorganges über den Schraubenkopf ihr seitliches Spiel gegenüber dem Flansch auf den durch die Flanschbreite verringerten Abstand der Führungsschenkel beseitigt und gleichzeitig auch eine Zentrierung bezüglich des die Spannschraube tragenden Flansches herbeigeführt.

Weitere Ausgestaltungen der erfindungsgemäßen Rohrschelle bilden den Gegenstand der Unteransprüche 10 bis 14. Die einzelnen Merkmale der Rohrschelle nach der Erfindung, inbesondere die der Ansprüche, können jeweils für sich oder zu mehreren in beliebiger anderer Kombination weitere Ausführungsformen der Erfindung bilden.

In den Zeichnungen zeigen, jeweils weitgehend schematisch,
- Fig. 1: in auseinandergezogener Teildarstellung eine Rohrschelle nach der Erfindung im Bereich der Flansche mit einer auf dem oberen Flansch geführten Halteplatte bei Anwendung einer elastischen Einlage,
- Fig. 2: eine perspektivische Darstellung der gesamten Schelle aus Fig. 1,
- Fig. 3: eine Draufsicht auf einen unteren Schellenbügel,
- Fig. 4: eine Draufsicht auf einen oberen Schellenbügel,
- Fig. 5: eine Draufsicht auf eine Halteplatte als Stanzteil,
- Fig. 6: eine Draufsicht auf die fertiggebogene Halteplatte in Fig. 5,
- Fig. 7: eine Frontansicht der Halteplatte nach Fig. 6 und

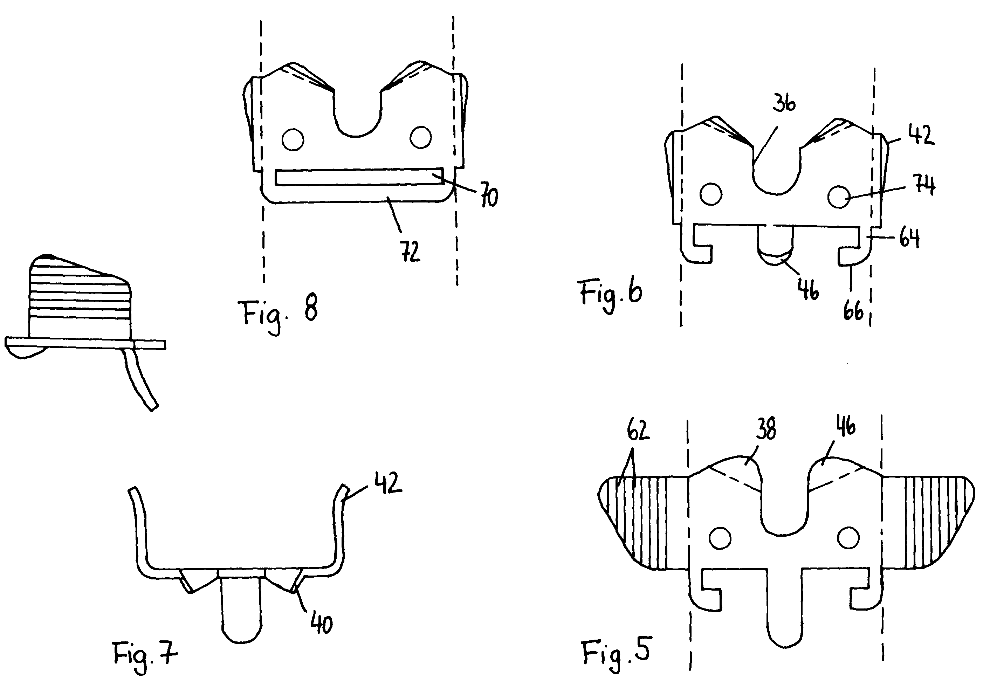

- Fig. 8: eine Draufsicht auf eine Halteplatten-Variante gemäß Anspruch 7.

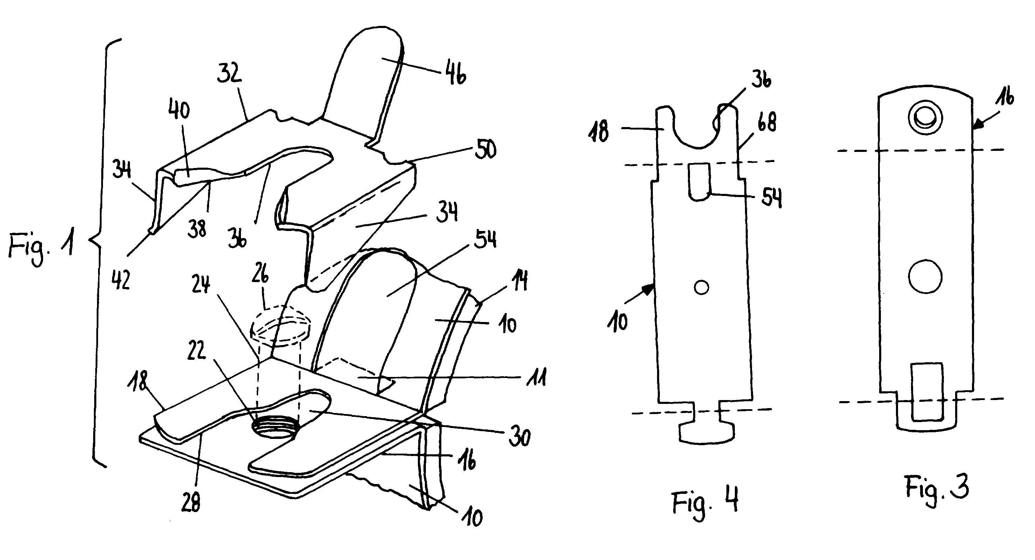

Die Rohrschelle gemäß Fig. 1 besteht aus einem gebogenen ein-oder zweiteiligen Schellenband 10, dessen Enden nach außen weisende Endflansche 16, 18 aufweisen, die bei um ein Rohr herumgelegter, geschlossener Schelle parallel gegenüberliegen. Die Innenseite der Schelle kann durch eine gummielastische Einlage 14 abgedeckt sein, die üblicherweise die Seitenkanten des Schellenbandes 10 jeweils mit einem nicht gezeigten Außenwulst umgreift. An der Stelle 11 it ein vom Flansch 18 ausgehender Vorsprung angedeutet, an dem eine Stirnseite der Einlage anliegt, wobei auch im Bereich des Flansches 16 ein solcher Vorsprung vorgesehen sein kann. Der Flansch 16 enthält eine Gewindeöffnung 22 für den Schaft 24 einer Spannschraube. Der Flansch 18 enthält einen zum freien Ende hin offenen Einschnitt 28, der breit genug ist, um den Schraubenkopf 26 mit seitlichem Spiel hindurchtreten zu lassen. Der Einschnitt 28 kann zum Flanschansatz hin in eine verjüngte Verlängerung 30 übergehen, die den Schraubenschaft 24 bei geschlossener Schelle umschließt.

Auf dem Flansch 18 liegt eine in Fig. 1 mit Abstand darüber dargestellte Halteplatte 32 auf, die über ihre etwa dem Flansch entsprechende Länge seitliche nach unten abgebogene Führungsschenkel 34 trägt. Die Führungsschenkel überdecken die Seitenkanten des Flansch 18 und ermöglichen eine geführte Schwenkbewegung der Halteplatte 32 um ihre im Biegebereich zwischen Flansch 18 und Schellenband 10 lagernde Hinterkante 50. Die Halteplatte 32 enthält einen Einschnitt 36, der wie die Verlängerung 30 im Flansch 18 zur Aufnahme des Schraubenschaftes 24 dient. Der Einschnitt 36 ist zum offenen Ende hin z.B. konisch erweitert, wobei die Kanten der Erweiterung 38 aufwärts gebogene Rastnasen 40 tragen, deren Höhe zum hinteren Ende des Einschnitts 36 allmählich abnimmt, und die zur Sicherung des Schraubenkopfes 26 bzw. endgültigen Positionierung der Halteplatte dienen, nachdem beim Zusammenführen beider Flansche die Halteplatte 32 außen angehoben und verschwenkt und sich dabei an der Einschnittserweiterung 36 vorbei über die Rastnasen 40 hinwegbewegt hat.

Während ihrer Ausweichbewegung liegt die Halteplatte 32 mit einer von ihrer Rückseite 50 ausgehenden nach oben in den allgemeinen Richtungsverlauf des Schellenbandes abgebogenen Zunge 46 federnd an der Einlage 14 oder am Rohr an. Beim Zusammenbau der Rohrschelle gelangt die Zunge 46 in den Bereich einer im Schellenband unmittelbar oberhalb des Flansches 18 vorgesehene Öffnung 54, die größer ist als die Zunge. Die in Umfangslänge des Schellenbandes 10 gemessene Höhe der Öffnung 54 reicht aus, um eine gewisse lineare Aufwärtsbewegung der Zunge 46 und damit der Halteplatte 32 beim Ausweichen gegenüber dem Schraubenkopf 26 zu ermöglichen, die zusätzlich zur Schwenkung erfolgt bzw. die Größe der Schwenkung verringert. Während dieser Ausweichbewegung bleibt die Halteplatte durch ihre Schenkel 34 am Flansch 18 geführt.

Fig. 2 zeigt eine Rohrschelle mit zwei gebogenen Schellenbügeln, die durch zusammensteckbare Scharnierteile 15 gelenkig miteinander verbunden sind. Am anderen Ende des Schellenbügels befindet sich wie in Fig. 1 der Flansch 18 mit einem nach außen offenen Einschnitt 28 für den Schraubenkopf 26 und einer rückwärtigen verjüngten Verlängerung 30 zur Aufnahme des Schraubenschaftes 28. Die Bügel können durch nach außen gewölbten Umfangssicken versteift sein.

Die gezeigte Halteplatte 32, die den Flansch 18 überdeckt, kann an ihrer Rückseite 50 Ausnehmungen enthalten, mit denen sie während ihrer Ausweichbewegungen an den Umfangssicken geführt ist. An der Außenseite der Führungsschenkel 34 sind parallel zur Ebene der Halteplatte 32 verlaufende Rillen angebracht, die sowohl als die Montage erleichternde Greifflächen dienen, als auch als leicht sichtbare Informationsanzeige mit dem Flansch 16 derart zusammenwirken, daß bei Fluchtung der Flanschebene mit einer der nahe dem freien Ende der Führungsschenkel verlaufenden Längsrillen, - deren Funktion auch eine Markierungskerbe an der längeren Stirnseite der Führungsschenkel übernehmen kann, - nach dem Schließen der Schelle deren durch Anziehen der Schraube bestimmbare Spannkraft noch relative Längsdehnungsbewegungen des von der Schelle umschlossenen Rohres zuläßt. Der seitliche Abstand der Führungsschenkel 34 entspricht über den größten Teil ihrer Höhe ungefähr der Breite des Flansches 16, während dieser Abstand im Breich der unteren vorderen Enden der Führungsschenkel durch gerundete oder winklig nach außen weisende Abbiegungen 42 erweitert ist.

Fig. 2 zeigt eine Ausführungsform einer Rohrschelle, an der die Halteplatte der vorbeschriebenen Art gegen unbeabsichtigtes Lösen oder Herabfallen ständig gesichert ist. Die Halteplatte 32 ist an ihrer Rückseite durch zwei schlanke Führungsansatze 66 verlängert, die zueinander abgewinkelte Sicherungsenden 66 aufweisen, um das Schellenband 10 seitlich zu umfassen. Die Halteplatte wird zusammen mit den Ansätzen aus einem Blechteil ausgestanzt, wobei letztere vorzugsweise im gleichen Schnitt- und Biegewerkzeug leicht soweit nach außen gebogen sein können, daß sie mit dem so erweiterten Abstand beim Zusammenbau der auf dem Flansch 16 aufliegenden Halteplatte beiderseits am Schellenband 10 vorbei geschoben und fixiert werden können, indem man beide Sicherungsansätze 64 z.B. mittels eines leichten Zangendruckes gegeneinander biegt.

Die Ansätze 64 dienen neben ihrer Sicherungsfunktion auch der zusätzlichen Führung bzw. Lagerung der Halteplatte 32 während ihrer Ausweichbewegungen. Im Schellenband 10 sind seitliche Ausnehmungen 68 vorgesehen, die sich über den Abwinklungsbereich bis in den Flansch 18 oder über dessen gesamte Länge erstrecken. Das Schellenband enthält entlang der die Ausweichbewegungen der Halteplatte ermöglichenden Ausnehmungen 68 herausgedrückte, seitlich offene Taschen 70, in denen die abgewinkelten Enden 66 der Ansätze 64 schwenkbar und verschiebbar gesichert sind.

Die Länge der Ansätze 64 einschließlich der abgewinkelten Enden 66 kann etwa der zweifachen Materialstärke des Schellenbandes entsprechen, wenn die Breite eines abgewinkelten Enden 66 ungefähr der halben Materialstärke entspricht, so daß genügend Führungsspiel vorhanden bleibt. Der somit geringfügige radiale innere Überstand der Sicherungsansätze 64 verbleibt je nach Schellengröße innerhalb eines Freiraums, der aufgrund der Toleranzen im Bereich der Abbiegung zwischen Flansch und Schellenband ensteht. Anstelle der gezeigten Ausführungsform können die Ansätze auch aus rückwärtigen Verlängerungen der Führungsschenkel 34 bestehen, wobei sie in diesem Fall vom rückwärtigen Ende der Führungsschenkel 34 aus nach oben bis in die rückwärtig verlängerte Ebene der Halteplatte verlaufen, damit ihre abgewinkelten Enden das Schellenband umfassen können. Die Ausnehmungen 68 im Schellenband sind nicht zwingend notwendig, vielmehr können die Sicherungsansätze auch die Außenkanten eines nicht ausgesparten Schellenbandes umfassen.

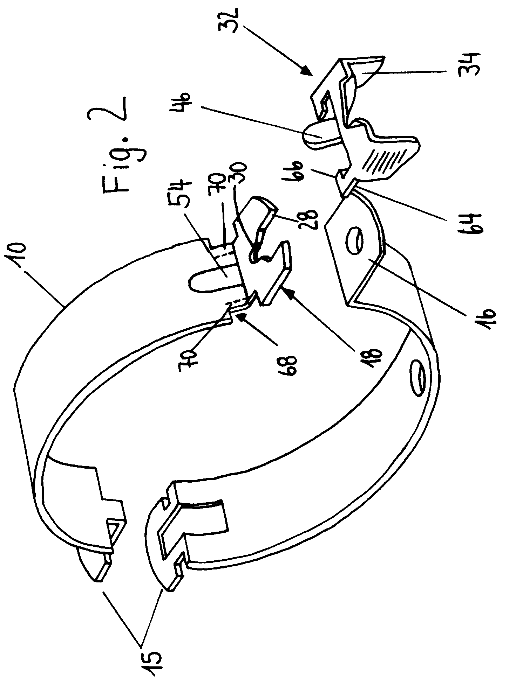

Einzelheiten einer Ausführungsform der Halteplatte 32 sind in Fig. 5 bis 7 dargestellt. Fig. 5 zeigt den Zuschnitt der Halteplatte 32 als Stanz-Blechteil mit seitlich anhängenden, noch nicht abgewinkelten Führungsschenkeln 34. Auf der Oberseite der Führungsschenkel 34 verlaufen die eingeprägten Rillen 62 parallel zur Erstreckungsrichtung der Halteplatte. An der Stirnseite der Halteplatte sind die vorbeschriebenen an die Stirnseite der Flansche angepaßten vorspringenden Schrägflächen 60 vorgesehen. Von der die Ausnehmungen 52 für Versteifungssicken im Schellenband enthaltenden Rückseite 50 geht mittig die Zunge 46 aus, deren Breite unter Berücksichtigung derjenigen des Schellenbandes beliebig gewählt wird. Die zur Stirnseite hin verbreiterte Form der Führungsschenkel 34 gemäß Fig. 5 entspricht im abgewinkelten Zustand der dort größeren Höhe der Führungsschenkel, die am unteren Ende die nach außen gerichtete Abbiegungen 42 erhalten. Diese Abbiegungen und der sich daraus ergebende größere Abstand der Führungsschenkel voneinander übergreift beim Zusammenführen der beiden Flansche 16, 18 zwangsläufig zentrierend den unteren Flansch 16. - Die in Fig. 6 mit Knicklinien angedeuteten von der Schlitzerweiterung 38 ausgehenden, noch flachen Rastnasen 40 sind gemäß Fig. 7 in ihrer nach oben über die Ebene der Halteplatte 32 gebogenen endügltigen Form gezeigt.

## Patentansprüche

1. Rohrschelle, deren Schellenband zwei mittels einer Schraube zusammenziehbare Flansche (16, 18) aufweist, von denen einer eine Gewindeöffnung für den Schraubenschaft (24) und der zweite einen Durchgang für den Schraubenkopf (26) enthält und von einer Halteplatte (32) überdeckt ist, die am äußeren Ende einen Einschnitt (36) als Aufnahme für den Schraubenschaft, am inneren Ende eine Zunge (46) sowie den Flansch (18) seitlich überfassende Führungsschenkel (34) aufweist,
**dadurch gekennzeichnet,**
- daß die Führungsschenkel (34) aus sich etwa über die Flanschlänge erstreckenden abgewinkelten Fortsetzungen der Halteplatte (32) bestehen, deren zum Flanschende hin zunehmende Höhe die Halteplatte während ihrer Ausweichbewegung gegenüber dem Schraubenkopf am Flansch geführt hält,
- daß das Schellenband (10) eine vom Flansch (18) ausgehende Öffnung (54) enthält, die der von der Halteplatte nach oben abgebogene Zunge (46) zugeordnet und größer als diese ist und der Halteplatte (32), unabhängig von ihrer Schwenkbarkeit, eine zusätzliche lineare Ausweichbewegung ermöglicht,
- und daß am inneren Ende der Halteplatte (32) Führungsansätze (64) mit zueinander abgewinkelten Sicherungsenden (66) angebracht sind, die das Schellenband an beiden Seiten oberhalb des Flansches (18) mit Spiel umfassen und die Halteplatte während ihrer Ausweichbewegung führen.

2. Rohrschelle nach Anspruch 1, dadurch gekennzeichnet, daß die Führungsansätze (64) rückwärtige seitliche Verlängerungen der Halteplatte (32) bilden.

3. Rohrschelle nach Anspruch 1, dadurch gekennzeichnet, daß die Führungsansätze (65) von den abgewinkelten Führungssschenkeln (34) als rückwärtige Verlängerungen ausgehen und sich mindestens im Bereich ihrer abgewinkelten Sicherungsenden (66) auf der bezüglich der Führungsschenkel (34) gegenüberliegenden Seite der Halteplatteebene befinden.

4. Rohrschelle nach Anspruch 2 oder 3, dadurch gekennzeichnet, daß die Führungsansätze (64) nach der Montage aus einem ursprünglich gespreizten Verlauf zur seitlichen Umfassung des Schellenbandes (10) gegeneinander biegbar sind.

5. Rohrschelle nach einem der vorhergehenden Ansprüche, dadurch gekennzeichnet, daß die Führungsansätze (64) sich durch seitliche Ausnehmungen (68) des Schellenbandes erstrecken, die über den Abwinklungsbereich des Flansches (18) bis in diesen reichen oder sich bis über die gesamte Flanschlänge erstrecken.

6. Rohrschelle nach Anspruch 5, dadurch gekennzeichnet, daß die abgewinkelten Sicherungsenden (66) in aus dem Schellenband herausgedrückten, seitlich offenen Taschen (70) aufgenommen sind, die von den Seiten des Schellenbandes oder der Ausnehmungen ausgehen.

7. Rohrschelle nach einem der vorhergehenden Ansprüche, dadurch gekennzeichnet, daß die Halteplatte (32) am inneren Ende etwas verlängert ist und eine sich über die Breite des Flansches (18) erstreckende Stanzöffnung enthält, wobei der hinter der Öffnung befindliche Abschnitt, der die Sicherungsfunktion übernimmt, in einer aus dem Schellenband herausgedrückten querverlaufenden Tasche oder Sicke aufgenommen ist.

8. Rohrschelle nach einem der vorhergehenden Ansprüche, dadurch gekennzeichnet, daß die Halteplatte (32) nahe ihrem inneren Ende und nahe den Flanschseitenkanten zwei Stanzlöcher enthält, durch die hindurch der Flansch (18) nach Montage der Halteplatte seitlich gestaucht bzw. verbreitert wird.

9. Rohrschelle nach einem der vorhergehenden Ansprüche, dadurch gekennzeichnet, daß der seitliche Abstand der Führungsschenkel (34) an ihren unteren Enden im Bereich der größeren Schenkelhöhe durch gerundete oder winklige Abbiegungen (42) erweitert ist.

10. Rohrschelle nach einem der vorhergehenden Ansprüche, dadurch gekennzeichnet, daß die während der Ausweichbewegung der Halteplatte (32) längs der Öffnung (54) im Schellenband bewegliche und/oder hindurchschwenkbare Zunge (46) parallel zum Schellenband oder radial außerhalb davon verläuft.

11. Rohrschelle nach einem der vorhergehenden Ansprüche, dadurch gekennzeichnet, daß die Führungsschenkel (34) parallel zur Ebene der Halteplatte (32) verlaufende äußere als Greiffläche wirksame rillenartige Einprägungen und/oder Markierungskerben nahe dem Ende ihrer längeren Stirnseite aufweisen, die bei Fluchtung mit dem überdeckten zweiten Flansch (16) das Annäherungsmaß beider Flansche anzeigen, bei dem die Schellenspannkraft noch relative Längsdehnungsbewegungen des von ihr umfaßten Rohres zuläßt.

12. Rohrschelle nach einem der vorhergehenden Ansprüche, dadurch gekennzeichnet, daß die Hinterkante (50) der Halteplatte (32) den aus dem Schellenband herausgedrückten, versteifenden Umfangsicken (12) entsprechende Ausnehmungen (52) enthält.

13. Rohrschelle nach einem der vorhergehenden Ansprüche, dadurch gekennzeichnet, daß die als Einschnitt (28) ausgebildete Durchgangsöffnung im zweiten Flansch (18) eine Verlängerung (30) in Richtung des Flanschansatzes aufweist, die etwa auf den Durchmesser des Schraubenschaftes (28) verjüngt ist.

14. Rohrschelle nach einem der vorhergehenden Ansprüche, dadurch gekennzeichnet, daß einer der beiden Flansche (16, 18) an seinem freien Ende einen etwa rechtwinklig in Richtung auf den anderen Flansch abgebogenen Abschnitt aufweist, der über die Länge des anderen Flansches übersteht und als Schraubenanziehkontrolle bei der Annäherung beider Flansche wirksam ist.

## Claims

1. Pipe clamp, the strap of which has two flanges (16, 18) which are pulled together by a screw, the first of which has a tapped opening for the screw shank (24) and the second of which has an opening for the screw head (26) and is covered by a retaining plate (32), which has a recess (36) cut-out on its outside edge to accommodate the screw shank, a tongue (46) at its inside edge, and locating legs at the side (34) which extend beyond the flange (18),
**characterised by the fact that**
- the locating legs (34) consist of extensions of the retaining plate (32) bent downwards roughly along the length of the flange, the height of which increases towards the flange end and thereby keeps the retaining plate in position on the flange as it makes way for the screw head,
- the strap (10) has an opening (54) starting at the flange (18), associated to and larger than the tongue (46) bent upwards from the retaining plate, and which allows the retaining plate (32) an additional linear escaping movement regardless of its ability to pivot,
- and at the inside end of the retaining plate (32) there are guide lugs (64) with retaining tabs (66) pointing towards each other, which fit around the strap on both sides above the flange (18) with some play and guide the retaining plate during its escaping movement.

2. Pipe clamp as in Claim 1, characterised by the fact that the guide lugs (64) constitute rearward extensions of the sides of the retaining plate (32).

3. Pipe clamp as in Claim 1, characterised by the fact that the guide lugs (65) are rearward extensions of the bent locating legs (34) and at least at their bent retaining tabs (66) are on the side of the retaining plate plane opposite the locating legs (34).

4. Pipe clamp as in Claims 2 or 3, characterised by the fact that the guide lugs (64) can after assembly be bent from an initial splayed position towards each other so that they enclose the strap (10).

5. Pipe clamp as in any of the preceding claims, characterised by the fact that the guide lugs (64) pass through openings (68) in the sides of the strap which reach beyond the bending zone of the flange (18) into it , or which extend over the entire length of the flange.

6. Pipe clamp as in Claim 5, characterised by the fact that the bent retaining tabs (66) engage in pockets (70) pressed out of the strap and open at the sides, which start from the sides of the strap or the recesses.

7. Pipe clamp as in any of the preceding claims, characterised by the fact that the retaining plate (32) is extended slightly at the inside end and has an opening punched in it extending over the width of the flange (18), with the part behind the opening, which performs the locking function, being accommodated in a transverse pocket or crease pressed out of the strap.

8. Pipe clamp as in any of the preceding claims, characterised by the fact that the retaining plate (32) has two holes punched in it near to its inside end and to the flange sides, through which the flange (18) is upset sideways and widened after assembly of the retaining plate.

9. Pipe clamp as in any of the preceding claims, characterised by the fact that the lateral distance between the locating legs (34) is increased in the zone of greater height at their bottom ends by rounded or angled bending (42).

10. Pipe clamp as in any of the preceding claims, characterised by the fact that the tongue (46) which can be moved along the opening (54) in the strap or swiveled through it during the escaping movement of the retaining plate (32) is shaped so that it runs parallel to the strap or radially outside of it.

11. Pipe clamp as in any of the preceding claims, characterised by the fact that the locating legs (34) near the end of their longer end surface have external embossed corrugations and/or grooved markings running parallel to the plane of the retaining plate (32) and acting as a gripping surface and which on alignment with the covered second flange (16) show the degree of proximity of the two flanges, where the clamping force still allows relative longitudinal expansion movements of the pipe surrounded by the clamp.

12. Pipe clamp as in any of the preceding claims, characterised by the fact that the rear edge (50) of the retaining plate (32) has recesses (52) to match the reinforcing circumferential corrugations (12) pressed out of the strap.

13. Pipe clamp as in any of the preceding claims, characterised by the fact that the passageway in the form of a recess (28) cut out in the second flange (18) has an extension (30) in the direction of the flange neck, narrowed to roughly the diameter of the screw shank (28).

14. Pipe clamp as in any of the preceding claims, characterised by the fact that one of the two flanges (16, 18) has at its free end a section which is bent roughly at right angle towards the other flange and protrudes beyond the length of the other flange and which acts as a check on tightening the screw when bringing the two flanges together.

## Revendications

1. Collier de fixation dont la bande comporte deux brides (16, 18) qui se tirent l'une contre l'autre par une vis, l'une des brides ayant un orifice fileté pour le corps de vis (24) et la seconde un passage pour la tête de vis (26), en étant recouverte d'une plaque de fixation (32) ayant une encoche (36) à son extrémité extérieure pour recevoir le corps de vis et une languette (46) à son extrémité intérieure ainsi que des branches de guidage (34) qui entourent latéralement la bride (18),
caractérisé en ce que
• les branches de guidage (34) sont constituées par des prolongements repliés de la plaque de fixation (32), s'étendant pratiquement sur toute la longueur de la bride et dont la hauteur va en croissant vers l'extrémité de la bride pour guider la plaque de fixation pendant son mouvement d'échappement par rapport à la tête de vis sur la bride,
• la bande (10) du collier comporte un orifice (54) partant de la bride (18), qui est associé à la languette (46) recourbée vers le haut de la plaque de fixation et est plus grande que celle-ci et permet à la plaque de fixation (32) un mouvement d'échappement linéaire supplémentaire, indépendamment de son pivotement,
• et à l'extrémité intérieure de la plaque de fixation (32) se trouvent des prolongements de guidage (64) avec des extrémités de fixation (66) recourbées l'une vers l'autre qui entourent la bande du collier, sur les deux côtés au-dessus de la bride (18), avec du jeu, et guident la plaque de fixation pendant son mouvement d'échappement.

2. Collier de fixation selon la revendication 1,
caractérisé en ce que
les prolongements de guidage (64) forment des prolongements arrières latéraux de la plaque de fixation (32).

3. Collier de fixation selon la revendication 1,
caractérisé en ce que
les prolongements de guidage (64) partent des branches de guidage repliées (34) comme prolongements arrières et se trouvent au moins au niveau de leur extrémité de fixation recourbée (66), sur le côté du plan de la plaque de fixation, opposé à celui des branches de guidage (34).

4. Collier de fixation selon la revendication 2 ou 3,
caractérisé en ce que
les prolongements de guidage (64) sont infléchis l'un par rapport à l'autre après le montage, en partant de leur forme initiale écartée, pour entourer latéralement le contour de la bande (10) du collier.

5. Collier de fixation selon l'une des revendications précédentes,
caractérisé en ce que
les prolongements de guidage (64) passent par des découpes (68) latérales de la bande de collier, qui s'étendent dans la zone recourbée de la bride (18) jusqu'au niveau de celle-ci ou qui s'étendent sur toute la longueur de la bride.

6. Collier de fixation selon la revendication 5,
caractérisé en ce que
les extrémités de fixation (66), recourbées, sont logées dans des poches (70) overtes sur les côtés et pressées vers l'exterieur de la bande de collier, et qui partent des côtés de la bande de collier ou des découpes.

7. Collier de fixation selon l'une des revendications précédentes,
caractérisé en ce que
la plaque de fixation (32) est légèrement prolongée au niveau de son extrémité intérieure et comporte un orifice matricé s'étendant sur toute la largeur de la bride (18), le segment se trouvant derrière l'ouverture et qui assure la fonction de fixation etant logé dans une cavité ou sertissage transversale correspondant, pressé vers l'extérieur de la bande de collier.

8. Collier de fixation selon l'une des revendications précédentes,
caractérisé en ce que
la plaque de fixation (32) comporte au niveau de son extrémité intérieure et à proximité des flancs latéraux de bride, deux orifices estampés à travers lesquels la bride (18) est tassée ou élargie latéralement après montage de la plaque de fixation.

9. Collier de fixation selon l'une des revendications précédentes,
caractérisé en ce que
la distance latérale des branches de guidage (34) à leur extrémité inférieure, dans la zone de la plus grande hauteur des branches est élargie par des parties repliées (42) arrondies ou avec des arêtes angulaires.

10. Collier de fixation selon l'une des revendications précédentes,
caractérisé en ce que
la languette (46) qui, pendant le mouvement d'échappement de la plaque de fixation (32) se déplace le long de l'orifice (54) de la bande de collier et/ou bascule à travers celui-ci, s'étende parallèlement à la bande ou radialement à l'extérieur de celle-ci.

11. Collier de fixation selon l'une des revendications précédentes,
caractérisé en ce que
les branches de guidage (34) comportent, comme surface de préhension, des parties matricées en forme de nervures et/ou des encoches de marquage qui sont parallèles au plan de la plaque de fixation (32), au niveau de l'extrémité de leur face frontale longue, qui en cas d'alignement avec la seconde bride (16) recouverte, indique le degré de rapprochement des deux brides pour lequel la force de serrage du collier permet encore des mouvements de dilatation longitudinale relative du tube entouré par le collier.

12. Collier de fixation selon l'une des revendications précédentes,
caractérisé en ce que
l'arête arrière (50) de la plaque de fixation (32) comporte des découpes (52) correspondant aux nervures périphériques (12) défoncées de la bande de collier assurant sa rigidité.

13. Collier de fixation selon l'une des revendications précédentes,
caractérisé en ce que
l'orifice traversant formé comme encoche (28) dans la seconde bride (18) comporte un prolongement (30) en direction de la base de la bride, qui diminue sensiblement jusqu'au diamètre du corps de vis (28).

14. Collier de fixation selon l'une des revendications précédentes,
caractérisé en ce que
l'une des deux brides (16, 18) comporte à son extrémité libre, un segment recourbé sensiblement à l'équerre en direction de l'autre bride, qui dépasse l'autre bride et fonctionne comme témoin de serrage par vis lorsque les deux brides se rapprochent.
